# EUROPEAN PATENT SPECIFICATION

(11) **EP 3 606 200 B1**
(45) Date of publication and mention of the grant of the patent: **10.07.2024**
(21) Application number: 18772581.7
(22) Date of filing: 06.03.2018
(51) Int. Cl.: H04W 72/00, H04W 72/04

(54) **METHOD AND DEVICE FOR CONFIGURING A SYSTEM PARAMETER SET, AND STORAGE MEDIUM**
VERFAHREN UND VORRICHTUNG ZUR KONFIGURATION EINES SYSTEMPARAMETERSATZES UND SPEICHERMEDIUM
PROCÉDÉ ET DISPOSITIF DE CONFIGURATION D'UN ENSEMBLE DE PARAMÈTRES DE SYSTÈME, ET SUPPORT DE STOCKAGE

(30) Priority: 24.03.2017 CN 201710184318
(43) Date of publication of application: 05.02.2020
(73) Proprietor: ZTE Corporation, Shenzhen, Guangdong 518057 (CN)
(72) Inventor: CHEN, Zhongming, Shenzhen Guangdong 518057 (CN); HUANG, He, Shenzhen Guangdong 518057 (CN)
(74) Representative: Vossius & Partner Patentanwälte Rechtsanwälte mbB
(86) International application number: PCT/CN2018/078140
(87) International publication number: WO 2018/171422

(56) References cited:
- EP-A1- 2 846 495
- WO-A1-2015/164251
- INTERDIGITAL COMMUNICATIONS: "MAC and HARQ Modelling with Multiple Numerologies", vol. RAN WG2, no. Spokane, USA; 20170117 - 20170119, 17 January 2017 (2017-01-17), XP051211039, Retrieved from the Internet <URL:http://www.3gpp.org/ftp/Meetings_3GPP_SYNC/RAN2/Docs/> [retrieved on 20170117]
- SAMSUNG: "Layer 2 Modelling for Multiple Numerologies", vol. RAN WG2, no. Spokane, USA; 20170117 - 20170119, 17 January 2017 (2017-01-17), XP051211186, Retrieved from the Internet <URL:http://www.3gpp.org/ftp/Meetings_3GPP_SYNC/RAN2/Docs/> [retrieved on 20170117]
- "3rd Generation Partnership Project; Technical Specification Group Radio Access Network; Evolved Universal Terrestrial Radio Access (E-UTRA); Medium Access Control (MAC) protocol specification (Release 13)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.4.0, 30 December 2016 (2016-12-30), pages 1 - 93, XP051230316
- VIVO: "Discussion on numerology multiplexing", vol. RAN WG1, no. Spokane, USA; 20170116 - 20170120, 16 January 2017 (2017-01-16), XP051207822, Retrieved from the Internet <URL:http://www.3gpp.org/ftp/Meetings_3GPP_SYNC/RAN1/Docs/> [retrieved on 20170116]
- "3rd Generation Partnership Project; Technical Specification Group Radio Access Network; Evolved Universal Terrestrial Radio Access (E-UTRA); Medium Access Control (MAC) protocol specification (Release 13)", 3GPP TS 36.321, vol. 5-6, no. V13.4.0, 30 December 2016 (2016-12-30), XP051230316

## Description

### TECHNICAL FIELD

The present disclosure relates to the field of communications and, in particular, to transmission and reception of Downlink Control Information.

### BACKGROUND

To meet the higher, faster and newer communication requirements predictable in the future, the industry has begun to carry out research on the future 5G technology. The 5G technology will be further researched in terms of greater throughput, more user connections, a lower latency, higher reliability, lower power consumption (including network side devices and user equipment) and the like.

After system parameter sets (i.e., numerologies) are introduced in the 5G technology, there is no effective solution at present for how a media access control (MAC) layer maintains normal operations of various functions and maximizes efficiency of the various functions while supporting multiple numerologies to meet different requirements of different services.

3GPP Draft document R2-1700467, describes a method for MAC and HARQ modelling with multiple numerologies. 3GPP Draft document R2-1700614 discusses a method for layer 2 modelling for multiple numerologies. EP 2 846 495 A1 describes a method and a device for scheduling multi-flow transmission. 3GPP standard document TS 36.312 V13.4.0 describes communication methods for communication between base stations and terminals. WO 2015/ 164251 A1 describes methods, systems, and devices for indicating a modulation coding scheme (MCS) in LTE. 3GPP Draft document R1-1700284 discusses numerology multiplexing. To solve the preceding technical problem, embodiments of the present disclosure provide a numerology configuration method and apparatus, and a storage medium.

### SUMMARY OF THE INVENTION

The present invention is defined by the independent claims. Dependent claims refer to preferred embodiments. In the following description, although numerous features may be designated as optional, it is nevertheless acknowledged that all features comprised in the independent claims are not to be read as optional.

An embodiment of the present disclosure provides a numerology configuration method.

The numerology configuration method includes steps described below.

A parameter subset is configured for a MAC layer operation, where the MAC parameter subset includes at least one of: an identifier of the MAC parameter subset; a priority of the MAC parameter subset; transmission time interval (TTI) information or numerology information supported by the MAC parameter subset; logical channel prioritization (LCP) configuration information corresponding to each numerology; a mapping relationship between a logical channel and the MAC parameter subset; discontinuous reception (DRX) configuration information corresponding to each numerology; hybrid automatic repeat request (HARQ) configuration information corresponding to each numerology; scheduling request (SR) configuration information corresponding to each numerology; buffer status report (BSR) information; configuration information about a random access channel (RACH) process associated with a numerology; configuration information about semi-persistent scheduling (SPS) associated with a numerology; format configuration information of a MAC data packet; or power headroom report (PHR) reported configuration information.

Another embodiment of the present disclosure provides a numerology configuration apparatus that includes a configuration module.

The configuration module is configured to configure a parameter subset of a MAC layer operation, where the MAC parameter subset includes at least one of: an identifier of the MAC parameter subset; a priority of the MAC parameter subset; TTI information or numerology information indicating one or more numerologies supported by the MAC parameter subset; LCP configuration information corresponding to each numerology; a mapping relationship between a logical channel and the MAC parameter subset; DRX configuration information corresponding to each numerology; HARQ configuration information corresponding to each numerology; SR configuration information corresponding to each numerology; BSR information; configuration information about a RACH process associated with a numerology; configuration information about SPS associated with a numerology; format configuration information of a MAC data packet; or PHR reported configuration information.

A numerology configuration apparatus includes a processor and a memory, where the memory is configured to store computer-executable instructions which, when executed by the processor, implement the following method: configuring a MAC parameter subset at a MAC layer, where the MAC parameter subset includes at least one of an identifier of the MAC parameter subset; a priority of the MAC parameter subset; TTI information or numerology information supported by the MAC parameter subset; LCP configuration information corresponding to each numerology; a mapping relationship between a logical channel and the MAC parameter subset; DRX configuration information corresponding to each numerology; HARQ configuration information corresponding to each numerology; SR configuration information corresponding to each numerology; BSR information; configuration information about a RACH process associated with a numerology; configuration information about SPS associated with a numerology; format configuration information of a MAC data packet; or PHR reported configuration information.

A storage medium is configured to store computer-executable instructions for implementing steps of any one method described above when the computer-executable instructions are executed.

The numerology configuration method and apparatus and the storage medium in the embodiments of the present disclosure enable the MAC layer to maintain normal operations of various functions and maximize efficiency of the various functions while supporting multiple numerologies to meet requirements of different services.

Additional features and advantages of the preset disclosure will be set forth in the description which follows, and in part will be apparent from the description, or may be understood by implementing the present disclosure. The objects and other advantages of the present disclosure can be achieved and obtained through the structures especially indicated in the description, claims and drawings.

### BRIEF DESCRIPTION OF DRAWINGS

The drawings are used to provide a further understanding of the technical solutions of the present disclosure, constitute a part of the specification, and explain the technical solutions of the present disclosure in conjunction with the embodiments of the present application.
FIG. 1 is a structural diagram of a MAC layer in a Long Term Evolution (LTE) system;
FIG. 2 is a flowchart of a numerology configuration method according to an embodiment of the present disclosure;
FIG. 3 is a schematic diagram of a structure of a MAC layer according to an embodiment of the present disclosure; and
FIG. 4 is a structural diagram of a numerology configuration apparatus according to an embodiment of the present disclosure.

### DETAILED DESCRIPTION

Objects, technical solutions and advantages of the present disclosure will be clearer from a detailed description of embodiments of the present disclosure in conjunction with the drawings. It is to be noted that if not in collision, the embodiments and features therein in the present application may be combined with each other.

The steps shown in the flowchart among the drawings may be performed by a computer system such as a group of computers capable of executing instructions. Although logical sequences are shown in the flowchart, the shown or described steps may be performed in sequences different from those described herein in some cases.

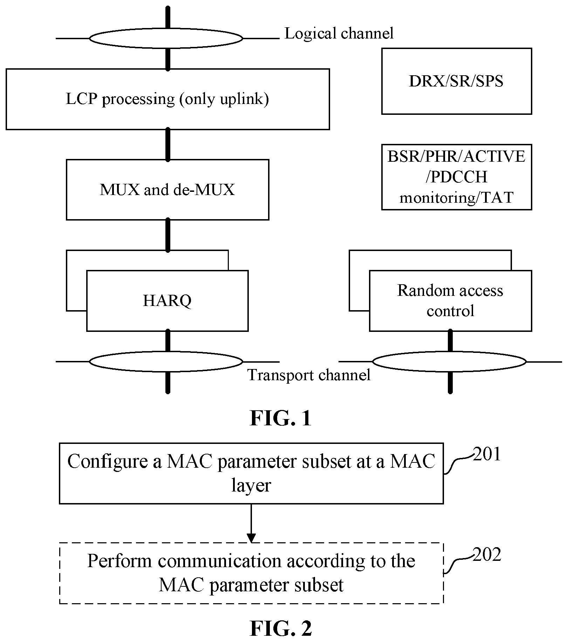

In a Long Term Evolution (LTE) system, a structure of a MAC layer is shown in FIG. 1. The MAC layer mainly provides data transmissions for a logical channel through a transport channel and allocates radio resources to implement an HARQ, LCP processing, multiplexing (MUX)/de-multiplexing, and in addition, functions, such as random access control, DRX reporting, an SR, a BSR, a PHR, ACTIVE/DEACTIVE, PDCCH monitoring, a time alignment (TA) maintenance, and SPS, are also contained.

At present, the industry proposes a goal of a 5G technology: by 2020, to increase mobile data services by 1000 times per region, to increase throughput by 10 to 100 times per user equipment (UE), to increase a number of connected devices by 10 to 100 times, to lengthen a battery service life by 10 times for a low-power device and to decrease an end-to-end latency by 5 times. From a perspective of an application scenario, a unified technical architecture is adopted in 5G to support enhanced mobile broadband (eMBB) services, massive machine type communication (mMTC) services, ultra reliable and low latency communication (URLLC) services, which have different requirements on a latency. To meet different service requirements, a concept of numerology is proposed, which refers to a set of parameters used by a communication system and includes a subcarrier spacing, a symbol length, a cyclic prefix (CP) length, and the like. The subcarrier spacing (SCS) in the LTE/LTE-A is fixed to be 15kHz, while the SCS in the 5G is to be set as 15*(2^n) kHz, where n may be a negative number. That is to say, the SCS may be set as 3.75kHz, 7.5kHz, 15kHz, 30kHz, 60kHz, 120kHz, etc., and a value of the SCS directly affects a length of symbols in a time domain. Each numerology may correspond to different TTI durations.

After the numerology is introduced, in the existing art, there is no effective solution for how the MAC layer maintains normal operations of various functions and maximizes efficiency of the various functions while supporting multiple numerologies, to meet different requirements of different services. The present application discloses a numerology configuration method and apparatus to guarantee the MAC layer to maintain the normal operations of the various functions and maximize the efficiency of the various functions while supporting multiple numerologies, to meet requirements of different services.

As shown in FIG. 2, the numerology configuration method in the present application includes the steps described below.

In step 201, a parameter subset is configured for a MAC layer operation. At least one of the following parameters is configured for the parameter subset: an identifier of the MAC parameter subset; a priority of the MAC parameter subset; TTI information or numerology information indicating one or more numerologies supported by the MAC parameter subset; LCP configuration information corresponding to each numerology; a mapping relationship between a logical channel (LC) and the MAC parameter subset; DRX configuration information corresponding to each numerology; HARQ configuration information corresponding to each numerology; SR configuration information corresponding to each numerology; BSR information, used for indicating a BSR of a logical channel group (LCG) transmittable on a current MAC parameter subset; configuration information about a RACH process associated with a numerology; configuration information about SPS associated with a numerology; format configuration information of a MAC data packet; or PHR reported configuration information. In step 202, communication is performed according to the MAC parameter subset.

The numerology configuration method provided by the present application enables the MAC layer to maintain normal operations of various functions and maximize efficiency of the various functions while supporting multiple numerologies, to meet requirements of different services. In practical applications, the MAC parameter subset may be configured at the MAC layer of a communication device such as a UE and a base station, and the communication device such as the UE and the base station performs communication according to the MAC parameter subset. For example, a network side may notify a terminal of the MAC parameter subset via a common signaling message and/or a dedicated signaling message; after receiving the MAC parameter subset, the terminal may configure the MAC parameter subset at its MAC layer and then the terminal may perform communication according to the MAC parameter subset.

In some embodiments, performing the communication according to the MAC parameter subset may include: in response to configuring the MAC parameter subset, using a part the MAC parameter subset to perform a transmission or a reception of resource scheduling received every time from the network side. In response to multiple instances of resource scheduling, transmissions or receptions of the multiple instances of resource scheduling are performed using different MAC parameter subsets.

In some embodiments, after multiple MAC parameter subsets are configured at the MAC layer, the method may further include: receiving scheduling information from a physical layer and determining a MAC parameter subset used for the current scheduling of a transmission according to the received scheduling information of the physical layer, so that the communication is performed according to the MAC parameter subset. Here, the MAC parameter subset used for the current scheduling can be determined according to an identifier (ID) of a MAC parameter subset (such as a transport channel ID) included in resource scheduling information such as the Downlink Control Information (DCI) of the physical layer. In some embodiments, in response to determining that the terminal configures multiple MAC parameter subsets and receives multiple instances of resource scheduling at the same time, LCP processing may be performed at the MAC layer according to the priority of the MAC parameter subsets after the MAC parameter subsets are configured at the MAC layer, so that the communication is performed according to a MAC parameter subset. For example, multiple instances of resource scheduling information of the physical layer are received at the same time. The MAC parameter subset used for a current scheduling of the transmission may be determined according to the received scheduling information of the physical layer. Subsequently, the LCP processing is performed at the MAC layer according to the priority of the MAC parameter subset. In the claimed embodiments, the part of the MAC parameter subset used for the current scheduling is determined according to an ID of the MAC parameter subset (such as the transport channel ID) included in the DCI.

In one specific embodiment, the MAC parameter subset may be a transport channel instance. When the MAC parameter subset is a transport channel instance, the MAC parameter subset includes one of the following parameters described in following instances: an identifier of the transport channel instance; a transport channel priority; TTI information or numerology information indicating one or more numerologies supported by the transport channel instance; the LCP configuration information corresponding to each numerology; a mapping relationship between logical channels and transport channel instances; the DRX configuration information corresponding to each numerology; the HARQ configuration information corresponding to each numerology; the SR configuration information corresponding to each numerology; the BSR information; the configuration information about the RACH process associated with the numerology; the configuration information about the SPS associated with the numerology; the format configuration information of the MAC data packet; or the PHR reported configuration information.

In some embodiments, configuring the MAC parameter subset at the MAC layer includes setting an identifier for each MAC parameter subset, where the identifier of the MAC parameter subset is used for configuration of other configuration information of the MAC parameter subset. Here, other configuration information identified by the MAC parameter subset includes at least one of: a transport format set (TFS) or a modulation and coding scheme (MCS).

In some embodiments, configuring the MAC parameter subset at the MAC layer includes configuring at least one piece of TTI information or numerology information indicating one or more numerologies for each MAC parameter subset. Here, configuring the MAC parameter subset at the MAC layer further includes: in response to determining that the MAC parameter subset is configured with a plurality of pieces of TTI information or a plurality of pieces of numerology information, setting a priority for each of pieces of TTI information or numerology information. Here, the numerology information includes first information used for indicating whether data of a numerology is allowed to be sent through resources of other numerologies.

In some embodiments, configuring transport channel instance information at the MAC layer may include one of: configuring a logical channel list supported by each numerology according to a priority order; or configuring a priority for each logical channel supported by each numerology.

In some embodiments, configuring the transport channel instance information at the MAC layer further includes describing a mapping relationship between logical channel and MAC parameter subset using an identifier of the MAC parameter subset and an identifier of the logical channel. In some embodiments, the DRX configuration information corresponding to each numerology includes at least one of: a length of an activation timer corresponding to the numerology; a length of a deactivation timer corresponding to the numerology; a length of an uplink retransmission timer corresponding to the numerology; or a length of a downlink retransmission timer corresponding to the numerology.

In some embodiments, the HARQ configuration information corresponding to each numerology includes at least one of: a maximum number of uplink (UL) HARQ transmissions of the numerology; whether to support TTI bundling; a maximum number of HARQ processes supported within an HARQ entity; whether to support a cross-numerology retransmission; whether to support a cross-carrier retransmission; or whether to support a blind retransmission and information related to the blind retransmission.

In some embodiments, the SR configuration information corresponding to each numerology includes at least an identifier of a resource used for an SR transmission triggered by data of the numerology.

In some embodiments, the configuration information about the RACH process associated with the numerology includes at least one of: information for indicating whether the RACH process allows to use different numerologies; or information for distinguishing preambles according to numerologies.

In some embodiments, the configuration information about the SPS associated with the numerology includes at least information for indicating whether the numerology supports the SPS.

In some embodiments, the LCP configuration information may include a priority (priorities) of one or more logical channels mapped onto each numerology.

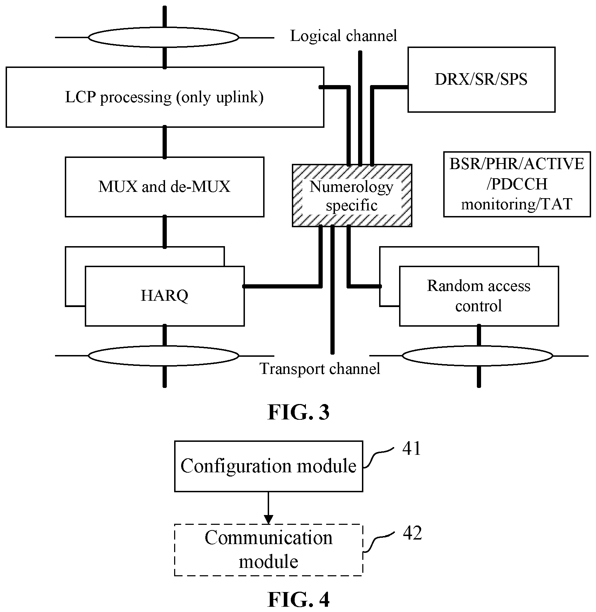

FIG. 3 is a schematic diagram illustrating an architecture of the MAC layer in the present application. In the present application, the architecture of the MAC layer mainly provides data transmissions for the logical channel through the transport channel and allocates radio resources, to implement an HARQ, LCP, multiplexing and the like. In addition, functions such as random access control, a DRX, an SR, a BSR, a PHR, ACTIVE/DEACTIVE, PDCCH monitoring, a TA maintenance, and SPS, etc., are also included. In addition, the MAC layer in the present application may further implement a numerology specific function.

A configuration manner and content of the transport channel instance information in the MAC layer of the present application are described below in detail through embodiments. It is to be noted that parameter values in various embodiment described below are only examples and are not intended to limit specific implementation manners of the present application.

### Embodiment 1

This embodiment describes a transport channel ID in detail.

In this embodiment, the transport channel ID is set for each transport channel. The transport channel ID is unique in a terminal and may be used for configuring other configuration information of the transport channel. The other configuration information of the transport channel may include a transport channel priority, a TFS, an MCS or the like.

Table 1 shows a configuration example of the transport channel ID.

**Table 1**

| Transport Channel ID | Transport Channel Priority | Configuration Information of the Transport Channel |
|---|---|---|
| 1 | 1 | Configuration information of a transport channel 1, such as the TFS or the MCS |
| 2 | 2 | Configuration information of a transport channel 2, such as the TFS or the MCS |
| 3 | 3 | Configuration information of a transport channel 3, such as the TFS or the MCS |
| ...... | ...... | ...... |

### Embodiment 2

This embodiment describes TTI information or numerology information supported by a transport channel in detail.

Each transport channel may support one or more TTIs or numerologies. The TTIs or numerologies supported by different transport channels may be partially identical, totally identical, or totally different. When one transport channel supports multiple TTIs or numerologies, a priority may be set for each TTI or numerology. Of course, the priority may not be configured.

Table 2 shows an information configuration example of numerologies supported by the transport channels. In this example, at least three numerologies, a numerology1, a numerology2, and a numerology3, are configured, where N1 represents the numerology1, N2 represents the numerology2, and N3 represents the numerology3.

**Table 2**

| Transport Channel ID | Numerology Supported by the Transport Channel | Remarks |
|---|---|---|
| 1 | N1 | The transport channel supports data transmission of N1. |
| 2 | N2, N3 | The transport channel supports data transmissions of N2 and N3. Alternatively, the transport channel preferentially supports data transmission of N2 and then data transmission of N3. |
| 3 | N1, N2, N3 | The transport channel supports data transmissions of N1, N2, and N3. Alternatively, the transport channel preferentially supports data transmission of N1, then data transmission of N2, and finally data transmission of N3. |
| ...... | ...... | ...... |

Table 3 shows a configuration example of TTIs supported by the transport channels. In this example, at least three TTIs are configured, whose lengths are separately 1ms, 0.5ms, and 0.25ms.

**Table 3**

| Transport Channel ID | TTI Supported by the Transport Channel | Remarks |
|---|---|---|
| 1 | TTI with a length of 1ms | The transport channel supports data transmission of the TTI with the length of 1ms. |
| 2 | TTIs with lengths of 0.5ms and 0.25ms | The transport channel supports data transmissions of the TTIs with lengths of 0.5ms and 0.25ms. Alternatively, the transport channel preferentially supports data transmission of the TTI with the length of 0.5ms and then data transmission of the TTI with the length of 0.25ms. |
| 3 | TTIs with lengths of 1ms, 0.5ms, and 0.25ms | The transport channel supports data transmissions of the TTIs with lengths of 1ms, 0.5ms, and 0.25ms. Alternatively, the transport channel preferentially supports data transmission of the TTI with the length of 1ms, then data transmission of the TTI with the length of 0.5ms, and finally data transmission of the TTI with the length of 0.25ms. |
| ...... | ...... | ...... |

When one transport channel supports multiple numerologies, information on a numerology supported by the transport channel may further include first information used for indicating whether data of the numerology is allowed to be sent through resources of other numerologies. Here, the data of the numerology refers to that the data transmission needs to meet a requirement defined by the numerology, and a resource of the numerology refers to a resource through which the data may be sent under the requirement defined by the numerology.

Table 4 shows a configuration example of first indication information.

**Table 4**

| Transport Channel ID | Numerology Supported by the Transport Channel | Whether the data of the numerology is allowed to be sent through resources of other numerologies |
|---|---|---|
| 1 | N1 | None |
| 2 | N2, N3 | Data of N2 may be sent through a resource of N3, or data of N3 cannot be sent through a resource of N2. |
| 3 | N1, N2, N3 | Data of N1 may be sent through the resource of N3, the data of N2 may be sent through the resource of N3, or the data of N3 cannot be sent through resources of N1 and N2. |
| ...... | ...... | ...... |

### Embodiment 3

This embodiment describes LCP configuration information corresponding to each numerology in detail.

In some embodiments, configuring processing priorities of LCs corresponding to each numerology supported by the transport channel comprises configuring a LC list supported by each numerology according to a priority, so that the corresponding priority may be reflected by an order of arranging LCs in the LC list. Table 5 shows an example of the LCP configuration information corresponding to each numerology in this configuration manner.

In another implementation manner, the manner for configuring the processing priorities of the LCs corresponding to each numerology supported by the transport channel may be configuring a priority for each LC supported by each numerology, so that the priority relationship may be obtained by comparing configured priorities. Table 7 shows an example of the LCP configuration information corresponding to each numerology in this configuration manner.

**Table 5**

| Supported Numerology | Configuration of Processing Priorities of LCs | Remarks |
|---|---|---|
| N1 | LC1, LC2 | For data of N1, data of LC1 is preferentially processed and then data of LC2 is processed. |
| N2 | LC2, LC3 | For data of N2, data of LC2 is preferentially processed and then data of LC3 is processed. |
| N3 | LC3, LC1, LC2 | For data of N3, data of LC3 is preferentially processed, then data of LC1 is processed, and finally data of LC2 is processed. |
| ...... | ...... | ...... |

Table 6 shows LCP configuration information corresponding to one service.

**Table 6**

| Supported service | Configuration of Processing Priorities of LCs | Remarks |
|---|---|---|
| URLLC | LC1, LC2 | For data of the URLLC, data of LC1 is preferentially processed and then data of LC2 is processed. |
| eMBBC | LC2, LC3 | For data of the eMBB, data of LC2 is preferentially processed and then data of LC3 is processed. |
| ...... | ...... | ...... |

**Table 7**

| Supported Numerology | Configuration of Processing Priorities of LCs | Remarks |
|---|---|---|
| N1 | LC1 with a priority of 2 | For data of N1, data of LC1 is preferentially processed and then data of LC2 is processed. |
| | LC2 with a priority of 3 | |
| N2 | LC2 with a priority of 1 | For data of N2, data of LC2 is preferentially processed and then data of LC3 is processed. |
| | LC3 with a priority of 2 | |
| N3 | LC3 with a priority of 1 | For data of N3, data of LC3 is preferentially processed, then data of LC1 is processed, and finally data of LC2 is processed. |
| | LC1 with a priority of 2 | |
| | LC2 with a priority of 3 | |
| ...... | ...... | ...... |

### Embodiment 4

This embodiment describes a mapping relationship between logical channels and transport channels in detail.

In a practical application, the mapping relationship between logical channels and transport channels may be described using identifiers of the transport channels (such as transport channel IDs) and identifiers of the logical channels (such as logical channel IDs). Table 8 shows an example of the mapping relationship between logical channels and transport channels.

**Table 8**

| Mapping Relationship Index | Logical Channel ID | Transport Channel ID | Remarks |
|---|---|---|---|
| 1 | 3 | 1 | Data of a logical channel ID 3 may be sent using a transport channel ID 1. |
| 2 | 4 | 2, 1 | Data of a logical channel ID 4 may be sent using a transport channel ID 2 and a transport channel ID 1. It may also be set that the data of the logical channel ID 4 may be preferentially sent using the transport channel ID 2 and then sent using the transport channel ID 1. |
| ...... | ...... | ...... | ...... |

### Embodiment 5

This embodiment describes DRX configuration information corresponding to each numerology in detail.

In a practical application, the DRX configuration information corresponding to each numerology may include one of a length of an activation timer (i.e., onDurationTimer) corresponding to the numerology, a length of a deactivation timer (i.e., inactivityTimer) corresponding to the numerology, a length of an uplink (UL) retransmission timer corresponding to the numerology, or a length of a downlink (DL) retransmission timer corresponding to the numerology.

Table 9 shows an example of the DRX configuration information corresponding to each numerology.

**Table 9**

| Numerology | Timer | Set Length | Remarks |
|---|---|---|---|
| N1 | onDurationTimer | psfl0 | When a DRX timer is started or restarted by triggering by scheduling, transmission, and the like of data of N1, a duration of a timer configured for N1 is used. |
| | InactivityTimer | psf8 | |
| | UL retransmission timer | psf6 | |
| | DL retransmission timer | psf8 | |
| N2 | onDurationTimer | psf20 | When a DRX timer is started or restarted by triggering by scheduling, transmission, and the like of data of N2, a duration of a timer configured for N2 is used. |
| | InactivityTimer | psfl0 | |
| | UL retransmission timer | psf8 | |
| | DL retransmission timer | psf6 | |
| ...... | ...... | ...... | ...... |

Table 10 shows DRX configuration information corresponding to one service.

**Table 10**

| Service | Timer | Set Length | Remarks |
|---|---|---|---|
| URLLC | onDurationTimer | psf10 | When a DRX timer is started or restarted by triggering by scheduling, transmission, and the like of data of the URLLC, a duration of a timer configured for the URLLC is used. |
| | InactivityTimer | psf8 | |
| | UL retransmission timer | psf6 | |
| | DL retransmission timer | psf8 | |
| eMBB | onDurationTimer | psf20 | When a DRX timer is started or restarted by triggering by scheduling, transmission, and the like of data of the eMBB, a duration of a timer configured for the eMBB is used. |
| | InactivityTimer | psf10 | |
| | UL retransmission timer | psf8 | |
| | DL retransmission timer | psf6 | |
| ...... | ...... | ...... | ...... |

### Embodiment 6

This embodiment describes HARQ configuration information corresponding to each numerology or service in detail.

A relationship between the service and the numerology needs to be specified. In a practical application, if there are multiple services, the HARQ configuration information may be selectively configured for one or more of the services. For example, if there are three services in total, the HARQ configuration information may be configured for only one service, or the HARQ configuration information may be configured for the three services.

The HARQ configuration information corresponding to each numerology may include one of: a maximum number of UL HARQ transmissions of the numerology; whether to support TTI bundling; a maximum number of HARQ processes supported within an HARQ entity; whether to support a cross-numerology retransmission; whether to support a cross-carrier retransmission; or whether to support a blind retransmission and information related to the blind retransmission. The HARQ configuration information corresponding to one service (such as URLLC) may include one of: a maximum number of UL HARQ transmissions of the service; whether to support the TTI bundling; the maximum number of HARQ processes supported within the HARQ entity; whether to support the cross-numerology retransmission; whether to support the cross-carrier retransmission; or whether to support the blind retransmission and the information related to the blind retransmission.

Table 11 shows an example of the HARQ configuration information corresponding to the numerology.

**Table 11**

| Numerology | HARQ Parameter | Remarks |
|---|---|---|
| N1 | Maximum number of UL HARQ transmissions | A maximum number of transmissions is set for data of N1 of UL |
| | Whether to support the TTI bundling | Whether data of N1 supports the TTI bundling |
| | Maximum number of HARQ processes supported within the HARQ entity | A maximum number of HARQ processes supported by the data of N1 within the HARQ entity |
| | Whether to support the cross-numerology retransmission | Whether to support a retransmission of the data of N1 through a changed numerology, that is, a new transmission using a resource of N1 and a retransmission through a resource of N2 |
| | Whether to support the cross-carrier retransmission | Whether to support a cross-carrier retransmission of the data of N1, that is, a new transmission through a cell 1 and a retransmission through a cell 2 |
| | Whether to support the blind retransmission | Whether to support a blind retransmission of the data of N1, that is, whether the data of N1 supports to be directly retransmitted without feedback from the opposite end |
| | Information related to the blind retransmission | A number of blind retransmissions, a time interval between two adjacent transmissions, a resource used for the blind retransmission, and the like |
| N2 | Maximum number of UL HARQ transmissions | A maximum number of transmissions is set for data of N2 of UL |
| | Whether to support the TTI bundling | Whether data of N2 supports the TTI bundling |
| | Maximum number of HARQ processes supported within the HARQ entity | A maximum number of HARQ processes supported by the data of N2 within the HARQ entity |
| | Whether to support the cross-numerology retransmission | Whether to support a retransmission of the data of N2 through a changed numerology, that is, a new transmission using the resource of N2 and a retransmission using the resource of N1 |
| | Whether to support the cross-carrier retransmission | Whether to support a cross-carrier retransmission of the data of N2, that is, a new transmission through the cell 1 and a retransmission through the cell 2 |
| | Whether to support the blind retransmission | Whether to support a blind retransmission of the data of N2, that is, whether the data of N1 supports to be directly retransmitted without the feedback from the opposite end |
| | Information related to the retransmission | The number of blind retransmissions, the time interval between two adjacent transmissions, the resource used for the blind retransmission, and the like |
| ...... | ...... | ...... |

Table 12 shows an example of the HARQ configuration information corresponding to URLLC, eMBBC or mMTC.

**Table 12**

| Traffic | HARQ Parameter | Remarks |
|---|---|---|
| URLLC or eMBBC or mMTC | Maximum number of UL HARQ transmissions | A maximum number of transmissions is set for data of a specified service |
| | Whether to support the TTI bundling | Whether the data of the specified service supports the TTI bundling |
| | Maximum number of HARQ processes supported within the HARQ entity | A maximum number of HARQ processes supported by the data of the specified service within the HARQ entity |
| | Whether to support the cross-numerology retransmission | Whether to support a retransmission of the data of the specified service through a changed numerology, that is, a new transmission using the resource of N1 and a retransmission through the resource of N2 |
| | Whether to support the cross-carrier retransmission | Whether to support a cross-carrier retransmission of the data of the specified service, that is, a new transmission through a cell 1 and a retransmission through a cell 2 |
| | Whether to support the blind retransmission | Whether to support a blind retransmission of the data of the specified service, that is, whether the data of the specified service supports to be directly retransmitted without the feedback from the opposite end |
| | Information related to the blind retransmission | The number of blind retransmissions, the time interval between two adjacent transmissions, the resource used for the blind retransmission, and the like |
| ...... | ...... | ...... |

### Embodiment 7

This embodiment describes SR configuration information corresponding to each numerology or one service in detail.

The SR configuration information corresponding to each numerology may include at least an identifier of a resource used for an SR transmission triggered by data of the numerology. Table 13 shows an example of the SR configuration information corresponding to each numerology. The SR configuration information corresponding to the service may include at least an identifier of a resource used for an SR transmission triggered by data of the service. Table 14 shows an example of the SR configuration information corresponding to multiple services (such as URLLC and eMBBC).

**Table 13**

| Numerology | SR Resource | Remarks |
|---|---|---|
| N1 | SR resource 1 | A resource used for an SR transmission triggered by data of N1 |
| N2 | SR resource 2 | A resource used for an SR transmission triggered by data of N2 |
| ...... | ...... | ...... |

**Table 14**

| Traffic | SR Resource | Remarks |
|---|---|---|
| URLLC | SR resource 1 | A resource used for an SR transmission triggered by data of the URLLC |
| eMBB | SR resource 2 | A resource used for an SR transmission triggered by data of the eMBBC |
| ...... | ...... | ...... |

### Embodiment 8

This embodiment describes configuration for a RACH process in detail.

Configuration information about a RACH process associated with a numerology may include at least whether the RACH process allows to use different numerologies, and information for distinguishing preambles according to numerologies. Table 15 shows an example of the information for distinguishing preambles according to numerologies in the configuration information about the RACH process associated with the numerology.

Configuration information about the RACH process associated with a service may include at least information for indicating whether the RACH process allows to use different numerologies, and the information for distinguishing preambles according to numerologies. Table 16 shows an example of the configuration information about the RACH process associated with the service.

**Table 15**

| Numerology | Available Preamble Information | Remarks |
|---|---|---|
| N1 | Available preamble information 1 | A preamble selectable by a RACH process triggered by data of N1 |
| N2 | Available preamble information 2 | A preamble selectable by a RACH process triggered by data of N2 |
| ...... | ...... | ...... |

**Table 16**

| Numerology | Available Preamble Information | Remarks |
|---|---|---|
| URLLC | Available preamble information 1 | A preamble selectable by a RACH process triggered by data of the URLLC |
| eMBB | Available preamble information 2 | A preamble selectable by a RACH process triggered by data of the eMBB |
| ...... | ...... | ...... |

### Embodiment 9

This embodiment describes an SPS configuration in detail.

Configuration information about SPS associated with a numerology may include at least information for indicating whether the numerology supports the SPS.

Configuration information about the SPS associated with a service may include at least information for indicating whether the service supports the SPS.

**Table 17**

| Numerology | Whether to Support the SPS | Remarks |
|---|---|---|
| N1 | Support | Data of N1 supports the SPS. |
| N2 | Nonsupport | Data of N2 does not support the SPS. |
| ...... | ...... | ...... |

**Table 18**

| Numerology | Whether to Support the SPS | Remarks |
|---|---|---|
| URLLC | Support | Data of the URLLC supports the SPS. |
| eMBB | Nonsupport | Data of the eMBB does not support the SPS. |
| ...... | ...... | ...... |

### Embodiment 10

This embodiment describes a BSR configuration in detail, as shown in table 19.

Each transport channel may be configured with a BSR of an LCG transmittable on the transport channel.

**Table 19**

| Transport Channel ID | BSR of a Transmittable LCG | Remarks |
|---|---|---|
| 1 | LCG0, LCG1 | BSRs which can transmit LCG0 and LCG1 |
| 2 | LCG2 | BSR which can transmit LCG2 |
| | | |

### Embodiment 11

This embodiment describes a format configuration of a MAC data packet in detail, as shown in table 20.

Format configuration information of the MAC data packet may include an LI length and the like.

**Table 20**

| Transport Channel ID | LI Length (Bits) in the MAC Data Packet | Remarks |
|---|---|---|
| 1 | 5 | The transport channel is configured as the URLLC service and the LI length may be shorter for a smaller data packet. |
| 2 | 10 | The transport channel is configured as the eMBB service and the LI length may be longer for various sizes of data packets. |

### Embodiment 12

This embodiment describes PHR reported configuration information in detail.

The PHR reported configuration information may include a calculation manner of a PHR and a subcarrier range reported in the PHR.

**Table 21**

| Transport Channel ID | Calculation Manner of the PHR | Remarks |
|---|---|---|
| 1 | Calculation manner 1 | The transport channel has a relatively short TTI, and the calculation manner, which is based on the relatively short TTI, is agreed in the protocol. |
| 2 | Calculation manner 2 | The transport channel has a narrower subcarrier, and the calculation manner, which is based on the narrower subcarrier, is agreed in the protocol. |

**Table 22**

| Transport Channel ID | Subcarrier Range Reported in the PHR | Remarks |
|---|---|---|
| 1 | To be determined | |
| 2 | To be determined | |

**Table 23**

| Numerology | Subcarrier Range Reported in the PHR | Remarks |
|---|---|---|
| Numerology 1 | 10 continuous subcarriers starting from a subcarrier 1 | A calculation range of the PHR is 10 continuous subcarriers starting from the subcarrier 1. |
| Numerology 2 | Two segments of subcarriers, 5 continuous subcarriers starting from the subcarrier 1, and 7 continuous subcarriers starting from a subcarrier 10 | The calculation range of the PHR are two segments of subcarriers, 5 continuous subcarriers starting from the subcarrier 1 and 7 continuous subcarriers starting from the subcarrier 10. |

To implement the methods in the embodiments of the present disclosure, as shown in FIG. 4, a numerology configuration apparatus in an embodiment of the present disclosure may include a configuration module 41.

The configuration module 41 is configured to configure a MAC parameter subset of a MAC layer operation. At least one of the following parameters are configured for the MAC parameter subset: an identifier of the MAC parameter subset; a priority of the MAC parameter subset; TTI information or numerology information indicating one or more numerologies supported by the MAC parameter subset; LCP configuration information corresponding to each numerology; a mapping relationship between a logical channel and the MAC parameter subset; DRX configuration information corresponding to each numerology; HARQ configuration information corresponding to each numerology; SR configuration information corresponding to each numerology; BSR information; configuration information about a RACH process associated with a numerology; configuration information about SPS associated with a numerology; format configuration information of a MAC data packet; or PHR reported configuration information. The apparatus may further include a communication module 42 which is configured to perform communication according to the MAC parameter subset.

In some embodiments, the configuration module is configured to configure the MAC parameter subset at the MAC layer by setting an identifier for each MAC parameter subset, where the identifier of the MAC parameter subset is used for configuration of other configuration information of the MAC parameter subset.

In some embodiments, other configuration information of the identifier of the MAC parameter subset includes at least one of a TFS or an MCS.

In some embodiments, the configuration module 41 is configured to configure the MAC parameter subset at the MAC layer by configuring at least one piece of TTI information or numerology information for each MAC parameter subset. Here, the configuration module 41 is further configured to configure the MAC parameter subset at the MAC layer further in the following manner: in response to determining that the MAC parameter subset is configured with a plurality of pieces of TTI information or multiple numerologies, a priority is set for each of the plurality of pieces of TTI information or each of the numerologies. The numerology information includes first information used for indicating whether data of a numerology is allowed to be sent through resources of other numerologies.

In some embodiments, the configuration module 41 is configured to configure the MAC parameter subset at the MAC layer by one of: configuring a logical channel list mapped onto each numerology according to a priority order; or configuring a priority for each logical channel mapped onto each numerology. The configuration module 41 is further configured to configure the MAC parameter subset at the MAC layer by describing a mapping relationship between the logical channel and MAC parameter subset using an identifier of the MAC parameter subset and an identifier of the logical channel.

In some embodiments, the DRX configuration information corresponding to each numerology includes at least one of: a length of an activation timer corresponding to the numerology; a length of a deactivation timer corresponding to the numerology; a length of an uplink retransmission timer corresponding to the numerology; or a length of a downlink retransmission timer corresponding to the numerology.

In some embodiments, the HARQ configuration information corresponding to each numerology includes at least one of a maximum number of UL HARQ transmissions of the numerology; whether to support TTI bundling; a maximum number of HARQ processes supported within an HARQ entity; whether to support a cross-numerology retransmission;

whether to support a cross-carrier retransmission; or whether to support a blind retransmission and information related to the blind retransmission.

In some embodiments, the SR configuration information corresponding to each numerology includes at least an identifier of a resource used for an SR transmission triggered by data of the numerology.

In some embodiments, the configuration information about the RACH process associated with the numerology includes at least one of: information for indicating whether the RACH process allows to use different numerologies; or information for distinguishing preambles according to numerologies.

In some embodiments, the configuration information about the SPS associated with the numerology includes at least information for indicating whether the numerology supports the SPS.

In some embodiments, the communication module 42 is configured to perform the communication according to the MAC parameter subset in the following manner: in case multiple MAC parameter subsets are configured for multiple instances of resource schedule, one of the multiple MAC parameter subsets is used to perform a transmission or a reception of resource scheduling received every time from a network side.

In some embodiments, the communication module 42 is configured to perform the communication according to the MAC parameter subset in the following manner: in response to receiving multiple instances of resource scheduling, transmissions or receptions according to the multiple instances of resource scheduling are performed using different MAC parameter subsets.

In some embodiments, after configuring the multiple MAC parameter subsets at the MAC layer, the configuration module 41 is further configured to determine one of the MAC parameter subsets used for current scheduling according to received physical layer scheduling information. The configuration module 41 is configured to determine one of the MAC parameter subsets used for the current scheduling by determining an ID of a MAC parameter subset included in physical layer resource scheduling information such as DCI.

In some embodiments, after configuring the multiple MAC parameter subsets at the MAC layer, the configuration module 41 is further configured to: in response to configuring the MAC parameter subsets and receiving multiple instances of resource scheduling at the same time, perform LCP processing at the MAC layer according to of the priority of the MAC parameter subset.

In some embodiments, in response to determining that the MAC parameter subset is a transport channel instance and the MAC parameter subset is a transport channel instance, the MAC parameter subset includes one of following parameters: an identifier of the transport channel instance; a transport channel priority; TTI information or numerology information supported by the transport channel instance; the LCP configuration information corresponding to each numerology; a mapping relationship between logical channels and transport channel instances; the DRX configuration information corresponding to each numerology; the HARQ configuration information corresponding to each numerology; the SR configuration information corresponding to each numerology; the BSR information; the configuration information about the RACH process associated with the numerology; the configuration information about the SPS associated with the numerology; the format configuration information of the MAC data packet; or PHR reported configuration information.

In some embodiments, the LCP configuration information includes priorities of one or more logical channels mapped onto each numerology.

In some embodiments, a structure of the MAC layer includes one of or any combination of the following functions: an HARQ, LCP, MUX, random access control, a DRX, an SR, a BSR, a PHR, ACTIVE/DEACTIVE, PDCCH monitoring, a TA maintenance, SPS, or a numerology specific.

Another numerology configuration apparatus in the present application includes a processor and a memory, where the memory is configured to store computer-executable instructions which, when executed by the processor, implement a method described below.

A parameter subset is configured for a MAC layer operation, where the MAC parameter subset includes at least one of: an identifier of the MAC parameter subset; a priority of the MAC parameter subset; TTI information or numerology information supported by the MAC parameter subset; LCP configuration information corresponding to each numerology; a mapping relationship between a logical channel and the MAC parameter subset; DRX configuration information corresponding to each numerology; HARQ configuration information corresponding to each numerology; SR configuration information corresponding to each numerology; BSR information; configuration information about a RACH process associated with a numerology; configuration information about SPS associated with a numerology; format configuration information of a MAC data packet; or PHR reported configuration information. The computer-executable instructions further implement, when executed by the processor, the following method: performing communication according to the MAC parameter subset after the MAC parameter subset is configured at the MAC layer.

The apparatus in this embodiment can implement the numerology configuration method of the present application and all the details of the various embodiments described above, and the implementation principles are the same, which are not repeated herein.

The numerology configuration apparatus provided by the present application enables the MAC layer to maintain normal operations of various functions and maximize efficiency of the various functions while supporting multiple numerologies to meet requirements of different services.

In practical applications, a communication device such as a UE and a base station may be provided with the numerology configuration apparatus so that the communication device such as the UE and the base station can perform communication according to information of the transport channel instance. For example, a network side may notify a terminal of the information of the transport channel instance via common signaling messages and/or dedicated signaling messages. The configuration module 41 on the terminal may receive the information of the transport channel instance from the network side and configure the information of the transport channel instance at a local MAC layer, and the communication module 42 may perform the communication using the information of the transport channel instance.

In addition, an embodiment of the present application further provides a computer-readable storage medium configured to store computer-executable instructions for implementing the numerology configuration method when the computer-executable instructions are executed. Optionally, in this embodiment, the storage medium may include, but is not limited to, a USB flash disk, a read-only memory (ROM), a random access memory (RAM), a mobile hard disk, a magnetic disk, an optical disk or another medium capable of storing program codes.

Optionally, in this embodiment, a processor executes the steps of the methods in the embodiments described above according to program codes stored in the storage medium. Optionally, for specific examples in this embodiment, reference may be made to the examples described in the above-mentioned embodiments and optional embodiments, and repetition will not be made in this embodiment.

It should be understood by those skilled in the art that all or some steps in the methods described above may be implemented by relevant hardware (such as a processor) as instructed by programs, and the programs may be stored in a computer-readable storage medium, such as a ROM, a magnetic disk, or an optical disk. Optionally, all or some steps in the embodiments described above may also be implemented by using one or more integrated circuits. Accordingly, the modules/units in the embodiments described above may be implemented by hardware. For example, the functions of these modules/units may be implemented by integrated circuits. Alternatively, these modules/units may be implemented by software function modules. For example, the functions of these modules/units may be implemented by using a processor to execute program/instructions stored in a memory. The present application is not limited to any specific combination of hardware and software.

The above illustrate and describe the basic principles, main features and advantages of the present application. The present application is not limited to the embodiments described above. The above-mentioned embodiments and the specification describe only the principles of the present application.

### INDUSTRIAL APPLICABILITY

The technical solutions provided by the embodiment of the present disclosure enable the MAC layer to maintain the normal operations of the various functions and maximize the efficiency of the various functions while supporting multiple numerologies to meet the requirements of different services.

## Claims

1. A wireless communication method, comprising:
transmitting, by a base station, a parameter subset of a media access control, MAC, layer operation, wherein at least one parameter of the parameter subset indicates one or more numerologies supported by the parameter subset;
transmitting, by the base station, a Downlink Control Information, DCI, at a physical layer to a terminal, wherein the DCI comprises an identifier of the parameter subset to enable a determination of a part of the parameter subset that is used for a scheduling of a communication; and
performing, by the base station, the communication with the terminal according to the parameter subset.

2. A wireless communication method, comprising:
receiving, by a terminal, a parameter subset of a media access control, MAC, layer operation based on a signaling message, wherein at least one parameter of the parameter subset indicates one or more numerologies supported by the parameter subset;
receiving by the terminal from a base station, a Downlink Control Information, DCI, at a physical layer, wherein the DCI comprises an identifier of the parameter subset;
determining, by the terminal according to the identifier of the parameter subset, a part of the parameter subset that is used for a scheduling of a communication; and
performing the communication by the terminal according to the parameter subset.

3. The method of claim 1 or 2, wherein the parameter subset further comprises an identifier for the parameter subset.

4. The method of claim 1 or 2, wherein the parameter subset further comprises configuration information about a random access channel, RACH, process.

5. The method of claim 1 or 2, wherein the parameter subset further comprises configuration information about semi-persistent scheduling, SPS.

6. A device for wireless communication, wherein the device is a base station or a part thereof, comprising:
a processor, and
a memory including processor executable code, wherein the processor executable code upon execution by the processor configures the processor to:
transmit a parameter subset of a media access control, MAC, layer operation, wherein at least one parameter of the parameter subset indicates one or more numerologies that are supported by the parameter subset;
transmit a Downlink Control Information, DCI, at a physical layer to a terminal, wherein the DCI comprises an identifier of the parameter subset to enable a determination of a part of the parameter subset that is used for a scheduling of a communication; and
perform a communication with the terminal according to the parameter subset.

7. A device for wireless communication, wherein the device is a terminal or a part thereof, comprising:
a processor, and
a memory including processor executable code, wherein the processor executable code upon execution by the processor configures the processor to:
receive a parameter subset of a media access control, MAC, layer operation based on a signaling message, wherein at least one parameter of the parameter subset indicates one or more numerologies supported by the parameter subset;
receive from a base station a Downlink Control Information, DCI, at a physical layer, wherein the DCI comprises an identifier of the parameter subset;
determine, according to the identifier of the parameter subset, a part of the parameter subset that is used for a scheduling of a communication; and
perform the communication according to the parameter subset.

8. The device of claim 6 or 7, wherein the parameter subset further comprises an identifier for the parameter subset.

9. The device of claim 6 or 7, wherein the parameter subset further comprises configuration information about a random access channel, RACH, process.

10. The device of claim 6 or 7, wherein the parameter subset further comprises configuration information about semi-persistent scheduling, SPS.

11. A non-transitory storage medium having code stored thereon, the code upon execution by a processor of a base station, causing the processor to implement a method of any of claims 1 and 3 to 5, or upon execution by a processor of a terminal causing the processor to implement a method of any of claims 2 to 5.

## Patentansprüche

1. Drahtloses Kommunikationsverfahren, das aufweist:
Übertragen, durch eine Basisstation, einer Parameter-Teilmenge einer Medienzugriffssteuerungs-, MAC, Schicht-Operation, wobei mindestens ein Parameter der Parameter-Teilmenge eine oder mehrere von der Parameter-Teilmenge unterstützte Numerologien anzeigt;
Übertragen durch die Basisstation von Downlink-Steuerungsinformationen, DCI, auf einer physikalischen Schicht an ein Endgerät, wobei die DCI eine Kennung der Parameter-Teilmenge aufweisen, um eine Bestimmung eines Teils der Parameter-Teilmenge zu ermöglichen, der für eine Planung einer Kommunikation verwendet wird; und
Durchführen der Kommunikation mit dem Endgerät durch die Basisstation gemäß der Parameter-Teilmenge.

2. Drahtloses Kommunikationsverfahren, das aufweist:
Empfangen, durch ein Endgerät, eines Parameter-Teilmenge einer Medienzugriffssteuerungs-, MAC-Schicht-Operation basierend auf einer Signalisierungsnachricht, wobei mindestens ein Parameter der Parameter-Teilmenge eine oder mehrere von der Parameter-Teilmenge unterstützte Numerologien anzeigt;
Empfangen durch das Endgerät von Downlink-Steuerungsinformationen, DCI, von einer Basisstation auf einer physikalischen Schicht, wobei die DCI eine Kennung der Parameter-Teilmenge aufweisen;
Bestimmen, durch das Endgerät gemäß der Kennung der Parameter-Teilmenge, eines Teils der Parameter-Teilmenge, der für eine Planung einer Kommunikation verwendet wird; und
Durchführen der Kommunikation durch das Endgerät gemäß der Parameter-Teilmenge.

3. Verfahren nach Anspruch 1 oder 2, wobei die Parameter-Teilmenge ferner eine Kennung für die Parameter-Teilmenge aufweist.

4. Verfahren nach Anspruch 1 oder 2, wobei die Parameter-Teilmenge ferner Konfigurationsinformationen über einen Direktzugriffkanal-, RACH,-Prozess aufweist.

5. Verfahren nach Anspruch 1 oder 2, wobei die Parameter-Teilmenge ferner Konfigurationsinformationen über semi-persistente Planung (SPS) aufweist.

6. Vorrichtung zur drahtlosen Kommunikation, wobei die Vorrichtung eine Basisstation oder ein Teil davon ist, die aufweist:
einen Prozessor, und
einen Speicher mit prozessorausführbarem Code, wobei der prozessorausführbare Code bei Ausführung durch den Prozessor den Prozessor konfiguriert, um:
eine Parameter-Teilmenge einer Operation der Medienzugriffssteuerung-, MAC,-Schicht zu übertragen, wobei mindestens ein Parameter der Parameter-Teilmenge eine oder mehrere von der Parameter-Teilmenge unterstützte Numerologien anzeigt;
Downlink-Steuerungsinformationen, DCI, auf einer physikalischen Schicht an ein Endgerät zu übertragen, wobei die DCI einen Kennung der Parameter-Teilmenge aufweisen, um eine Bestimmung eines Teils der Parameter-Teilmenge zu ermöglichen, der für eine Planung einer Kommunikation verwendet wird; und
eine Kommunikation mit dem Endgerät gemäß der Parameter-Teilmenge durchzuführen.

7. Vorrichtung zur drahtlosen Kommunikation, wobei die Vorrichtung ein Endgerät oder ein Teil davon ist, die aufweist:
einen Prozessor, und
einen Speicher mit prozessorausführbarem Code, wobei der prozessorausführbare Code bei Ausführung durch den Prozessor den Prozessor konfiguriert, um:
eine Parameter-Teilmenge einer Operation der Medienzugriffssteuerung-, MAC,-Schicht basierend auf einer Signalisierungsnachricht zu empfangen, wobei mindestens ein Parameter der Parameter-Teilmenge eine oder mehrere von dem Parameter-Teilmenge unterstützte Numerologien anzeigt;
Downlink-Steuerungsinformationen, DCI, auf einer physikalischen Schicht von einer Basisstation zu empfangen, wobei die DCI eine Kennung der Parameter-Teilmenge aufweisen;
einen Teil der Parameter-Teilmenge, der für eine Planung einer Kommunikation verwendet wird, gemäß der Kennung der Parameter-Teilmenge zu bestimmen; und die Kommunikation gemäß der Parameter-Teilmenge durchzuführen.

8. Vorrichtung nach Anspruch 6 oder 7, wobei die Parameter-Teilmenge ferner eine Kennung für die Parameter-Teilmenge aufweist.

9. Vorrichtung nach Anspruch 6 oder 7, wobei die Parameter-Teilmenge ferner Konfigurationsinformationen über einen Direktzugriffkanal-, RACH,-Prozess aufweist.

10. Vorrichtung nach Anspruch 6 oder 7, wobei die Parameter-Teilmenge ferner Konfigurationsinformationen über eine semi-persistente Planung (SPS) aufweist.

11. Nichtflüchtiges Speichermedium mit darauf gespeichertem Code, wobei der Code bei Ausführung durch einen Prozessor einer Basisstation den Prozessor veranlasst, ein Verfahren nach einem der Ansprüche 1 und 3 bis 5 zu implementieren, oder bei Ausführung durch einen Prozessor eines Endgeräts den Prozessor veranlasst, ein Verfahren nach einem der Ansprüche 2 bis 5 zu implementieren.

## Revendications

1. Procédé de communication sans fil, comprenant :
la transmission, par une station de base, d'un sous-ensemble de paramètres d'une opération de couche de commande d'accès au support, MAC, où au moins un paramètre du sous-ensemble de paramètres indique une ou plusieurs numérologies assistées par le sous-ensemble de paramètres ;
la transmission à un terminal, par la station de base, d'informations de commande de liaison descendante, DCI, sur une couche physique, où la DCI comprend un identifiant du sous-ensemble de paramètres pour permettre la détermination d'une partie du sous-ensemble de paramètres utilisée pour la programmation d'une communication ; et
l'exécution, par la station de base, de la communication avec le terminal en fonction du sous-ensemble de paramètres.

2. Procédé de communication sans fil, comprenant :
la réception, par un terminal, d'un sous-ensemble de paramètres d'une opération de couche de commande d'accès au support, MAC, sur la base d'un message de signalisation, où au moins un paramètre du sous-ensemble de paramètres indique une ou plusieurs numérologies assistées par le sous-ensemble de paramètres ;
la réception par le terminal, en provenance d'une station de base, d'informations de commande de liaison descendante, DCI, sur une couche physique, les informations de commande de liaison descendante, DCI, comprenant un identifiant du sous-ensemble de paramètres ;
la détermination, par le terminal en fonction de l'identifiant du sous-ensemble de paramètres, d'une partie du sous-ensemble de paramètres utilisée pour la programmation d'une communication ; et
l'exécution de la communication par le terminal en fonction du sous-ensemble de paramètres.

3. Procédé selon la revendication 1 ou la revendication 2, où le sous-ensemble de paramètres comprend en outre un identifiant du sous-ensemble de paramètres.

4. Procédé selon la revendication 1 ou la revendication 2, où le sous-ensemble de paramètres comprend en outre des informations de configuration relatives à un processus de canal d'accès aléatoire, RACH.

5. Procédé selon la revendication 1 ou la revendication 2, où le sous-ensemble de paramètres comprend en outre des informations de configuration relatives à une programmation semi-persistante, SPS.

6. Dispositif de communication sans fil, où ledit dispositif est une station de base ou une partie de celle-ci, comprenant :
un processeur, et
une mémoire comprenant un code exécutable par processeur, ledit code exécutable par processeur, une fois exécuté par un processeur, configurant celui-ci pour :
transmettre un sous-ensemble de paramètres d'une opération de couche de commande d'accès au support, MAC, où au moins un paramètre du sous-ensemble de paramètres indique une ou plusieurs numérologies assistées par le sous-ensemble de paramètres ;
transmettre à un terminal des informations de commande de liaison descendante, DCI, sur une couche physique, où la DCI comprend un identifiant du sous-ensemble de paramètres pour permettre la détermination d'une partie du sous-ensemble de paramètres utilisée pour la programmation d'une communication ; et
établir une communication avec le terminal en fonction du sous-ensemble de paramètres.

7. Dispositif de communication sans fil, où le dispositif est un terminal ou une partie de celui-ci, comprenant :
un processeur, et
une mémoire comprenant un code exécutable par processeur, ledit code exécutable par processeur, une fois exécuté par un processeur, configurant celui-ci pour :
recevoir un sous-ensemble de paramètres d'une opération de couche de commande d'accès au support, MAC, sur la base d'un message de signalisation, où au moins un paramètre du sous-ensemble de paramètres indique une ou plusieurs numérologies assistées par le sous-ensemble de paramètres ;
recevoir d'une station de base d'informations de commande de liaison descendante, DCI, au niveau d'une couche physique, où la DCI comprend un identifiant du sous-ensemble de paramètres ;
déterminer, en fonction de l'identifiant du sous-ensemble de paramètres, une partie du sous-ensemble de paramètres utilisée pour la programmation d'une communication ; et effectuer la communication en fonction du sous-ensemble de paramètres.

8. Dispositif selon la revendication 6 ou la revendication 7, où le sous-ensemble de paramètres comprend en outre un identifiant du sous-ensemble de paramètres.

9. Dispositif selon la revendication 6 ou la revendication 7, où le sous-ensemble de paramètres comprend en outre des informations de configuration relatives à un processus de canal d'accès aléatoire, RACH.

10. Dispositif selon la revendication 6 ou la revendication 7, où le sous-ensemble de paramètres comprend en outre des informations de configuration relatives à une programmation semi-persistante, SPS.

11. Support d'enregistrement non transitoire sur lequel est stocké un code dont l'exécution par un processeur d'une station de base entraîne la mise en oeuvre par ledit processeur d'un procédé selon l'une des revendications 1 et 3 à 5, ou dont l'exécution par un processeur d'un terminal entraîne la mise en oeuvre par ledit processeur d'un procédé selon l'une des revendications 2 à 5.
